(19) Europäisches Patentamt
European Patent Office
Office européen des brevets

(11) **EP 2 326 604 B1**

(12) **EUROPÄISCHE PATENTSCHRIFT**

(45) Veröffentlichungstag und Bekanntmachung des Hinweises auf die Patenterteilung:
**20.08.2014 Patentblatt 2014/34**

(21) Anmeldenummer: **09782926.1**

(22) Anmeldetag: **11.09.2009**

(51) Int Cl.:
*C04B 35/01* (2006.01)   *C04B 35/26* (2006.01)
*C04B 35/44* (2006.01)

(86) Internationale Anmeldenummer:
**PCT/EP2009/061818**

(87) Internationale Veröffentlichungsnummer:
**WO 2010/029156 (18.03.2010 Gazette 2010/11)**

(54) **KERAMIKMATERIAL, VERFAHREN ZUR HERSTELLUNG EINES KERAMIKMATERIALS UND ELEKTROKERAMISCHES BAUELEMENT UMFASSEND DAS KERAMIKMATERIAL**

CERAMIC MATERIAL, METHOD FOR THE MANUFACTURE OF A CERAMIC MATERIAL AND ELECTROCERAMIC COMPONENT COMPRISING THE CERAMIC MATERIAL

MATÉRIAU CÉRAMIQUE, PROCÉDÉ DE FABRICATION D'UN MATÉRIAU CÉRAMIQUE, ET COMPOSANT ÉLECTROCÉRAMIQUE COMPRENANT LE MATÉRIAU CÉRAMIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.09.2008 DE 102008046858**

(43) Veröffentlichungstag der Anmeldung:
**01.06.2011 Patentblatt 2011/22**

(73) Patentinhaber: **Epcos AG**
**81669 München (DE)**

(72) Erfinder:
• **NEUBER, Danilo**
**A-8010 Graz (AT)**

• **FELTZ, Adalbert**
**A-8530 Deutschlandsberg (AT)**

(74) Vertreter: **Epping, Wilhelm**
**Epping Hermann Fischer**
**Patentanwaltsgesellschaft mbH**
**Schloßschmidstraße 5**
**80639 München (DE)**

(56) Entgegenhaltungen:
**EP-A- 1 775 274      DE-A1-102007 012 468**
**JP-A- 2003 183 075**

**Beschreibung**

Ein weit verbreitetes Problem von Keramikmaterialien, welche als Heißleiter eingesetzt werden, besteht darin, dass die Widerstände der Keramikmaterialien eine B-Konstante aufweisen, die zwar die Anforderungen an die Thermistorempfindlichkeit erfüllt, der Wert für die B-Konstante im Hochtemperaturbereich aber zu Widerstandswerten führt, die sich für eine praktische messtechnische Erfassung als zu gering erweisen.

Unter einem Heißleiterwiderstand versteht man ein stromleitendes Material, welches bei höheren Temperaturen den Strom besser leitet als bei niedrigeren Temperaturen. Der Widerstand des Materials sinkt mit steigenden Temperaturen. Diese Materialien weisen also einen negativen Temperaturkoeffizienten auf, weshalb sie auch NTC-Materialien (negative temperature coefficient) genannt werden. Für ein NTC-Material, beziehungsweise ein elektrokeramisches Bauelement, das ein solches Material umfasst, kann eine Kennlinie bestimmt werden. Dies kann durch die Arrheniusbeziehung, die wie folgt lautet, beschrieben werden:

$$R_T = R_N \exp [B*(1/T-1/T_N)] \quad bzw. \quad \rho_T = \rho_N \exp [B*(1/T-1/T_N)]$$

Hierbei stehen $R_T$ für den Widerstand und $\rho_T$ für den spezifischen Widerstand bei der Temperatur T. $R_N$ steht für den Widerstand bei einer vereinbarten Nenntemperatur $T_N$, zum Beispiel $T_N = 25°C$. Die B-Konstante entspricht dem Quotienten $E_A/k$, wobei $E_A$ die thermische Aktivierungsenergie und k die Boltzmannkonstante ist. $R_T$ ist mit $\rho_T$ über den Geometriefaktor gemäß $R_T = \rho_T*L_k/A_k$ verknüpft, wobei $A_k$ für die kontaktierte Fläche eines planparallelen Probekörpers und $L_k$ für den Abstand zwischen den kontaktierten Flächen steht. Die thermische Aktivierungsenergie gibt die Aktivierungsenergie für die Polaronenleitung an und wird im Allgemeinen auf ein bestimmtes Temperaturintervall, beispielsweise für $B_{25/100°C}$ auf das Intervall von 25 bis 100°C bezogen.

Unter Polaronen versteht man die Kopplung elektronischer Ladungsträger mit Gitterschwingungen, den Phononen, deren Verknüpfung in der Theorie als Quasiteilchen bezeichnet wird.

Die B-Konstante ist des Weiteren ein Maß für die temperaturabhängige Empfindlichkeit $\alpha$, die die Veränderung des Widerstandes eines elektrokeramischen Bauelements in Abhängigkeit von der Temperatur angibt:

$$\alpha = 1/\rho_T \ (d\rho_T \ /dT) = - B/T^2$$

Eine Aufgabe von Ausführungsformen der Erfindung besteht darin, ein Keramikmaterial für die Temperaturmessung im Temperaturbereich von Raumtemperatur (~25°C) bis 1000°C bereitzustellen, das eine hohe Langzeitstabilität aufweist.

Die Aufgabe wird durch ein Keramikmaterial nach Anspruch 1 gelöst. Weitere Ausführungsformen des Keramikmaterials, sowie ein elektrokeramisches Bauelement, das das Keramikmaterial umfasst, sind Gegenstand weiterer Ansprüche. Des Weiteren wird ein Verfahren zur Herstellung eines Keramikmaterials beansprucht.

Eine Ausführungsform der Erfindung betrifft ein Keramikmaterial der allgemeinen Formel:

$$[SE_{1-x}M^{II}_x] [Cr_{1-y-z}R_yL_z]O_3$$

wobei SE für eine oder mehrere Seltenerdmetalle steht, $M^{II}$ für ein oder mehrere Metalle der Oxidationsstufe +11 steht, L für Al und/oder Ga steht, R für ein oder mehrere Metalle ausgewählt aus Fe, Zn, Ge, Sn steht, und es gilt: $0 < x < 1$; $0 < y < 1$; $0,5 < z < 1$; $y+z < 1$; $0,1 < 1-y-z < 0,2$.

Das Keramikmaterial lässt sich durch die allgemeine Formel $ABO_3$ beschreiben, wobei SE und $M^{II}$ auf den A-Plätzen angeordnet sind und Cr, L und R auf den B-Plätzen. Der Widerstand des Keramikmaterials wird durch geeignete Kombination dieser Bestandteile eingestellt. Die Einstellung des Widerstandes kann durch das "Verdünnen" des Cr durch den Einbau von L und zusätzlich noch von R auf den B-Plätzen der Keramik erfolgen. Die für R und L gewählten Elemente weisen vorzugsweise eine Ladungstransportindifferenz auf, d.h. sie sind im Kristallgitter des Keramikmaterials auf eine Oxidationsstufe festgelegt. Cr hingegen kann seine Oxidationsstufen wechseln. Der Ladungstransport ist im gesamten Temperaturbereich auf die Polaronen-Platzwechsel-Prozesse des Cr beschränkt.

In einer weiteren Ausführungsform steht R für genau zwei Metalle $R^1$ und $R^2$, woraus sich die allgemeine Formel ergibt:

$$[SE_{1-x-p}M^{II}_{x+p}] [Cr_{1-y-z-r}R^2_{p+r}R^1_yL_{z-p}]O_3$$

für p und r gilt: $0,001 < p < 0,05$ und $r = 0$ falls $R^2 = R^{2 \ IV}$ ein redoxstabiles Kation der Oxidationsstufe IV ist, und anderenfalls $0,001 < r < 0,05$ und $p = 0$ gilt, wenn $R^2 = R^{2\,II}$ ein redoxstabiles Kation der Oxidationsstufe II ist. Für den Fall, dass $p = 0$ ist, kann eine Zunahme der $Cr^{IV}$-Konzentration durch Einführung redoxstabiler Kationen $R^2$ der Oxidationsstufe II, z. B. von $Zn^{II}$ auf den B-Plätzen der Perowskitstruktur erreicht werden. Hierbei kann ohne Einführung eines oder mehrer weiterer Übergangsmetallkationen mit wechselnder Valenz eine Feineinstellung der Konzentration von Ladungsträgerzentren (Polaronen) und deren Aktivierungsenergie erreicht werden. Hierdurch wird eine Erhöhung der Leitfähigkeit erzielt, die aber infolge größerer Schwankungen im Gitterpotential und einer damit verknüpften Erhöhung der B-Konstante partiell kompensiert oder sogar überkompensiert werden kann, was zu einer Widerstandserhöhung führt und der Formel

$$[SE_{1-x}M^{II}_x]\,[Cr^{III}_{1-x-y-z-2r}Cr^{IV}_{x+r}Zn^{II}_rR^1_yL^z]O_3$$

entspricht oder indem gemäß der Formel

$$[SE_{1-x-p}M^{II}_{x+p}]\,[Cr^{III}_{1-x-y-z}Cr^{IV}_xR^{2IV}_pR^1yL_{z-p}]O_3$$

$r = 0$ mit $R^2 = R^{2\,IV} = Ge$ und/oder Sn die an das $Cr^{III}/Cr^{IV}$ - Verhältnis gebundene Polaronenkonzentration konstant gehalten wird. Hierdurch wird eine Widerstandserhöhung allein durch größere Unregelmäßigkeit in der Verteilung der potentiellen Energie an den Ladungsträgerzentren (Polaronen), und damit der B-Konstanten, bedingt durch den partiellen Einbau von vierwertigem Ge und/oder Sn anstelle der dreiwertigen Kationen R und L, z.B. L = Al, hervorgerufen.

Dabei stehen SE für eine oder mehrere Seltenerdmetalle, $M^{II}$ für ein oder mehrere Metalle der Oxidationsstufe +11, L für Al und/oder Ga, R für ein oder mehrere Metalle ausgenommen Cr, Al, Ga, Mn sowie $R^2 = Zn^{II}$ für $p = 0$ und $R^2 = R^{2\,IV} = Ge$ und/oder Sn für $r = 0$, und es gilt: $0 < x < 1$; $0 \leq y < 1$; $0,5 < z < 1$; $0,05 < 1-y-z < 1$ und $0,001 < r < 0,05$ im Fall $p = 0$ und $0,001 < p < 0,05$ im Fall $r = 0$.

Das Keramikmaterial lässt sich durch die allgemeine Formel $ABO_3$ beschreiben, wobei SE und $M^{II}$ auf den A-Plätzen angeordnet sind und Cr, L, Zn bzw. Ge und/oder Sn sowie R, soweit vorhanden, auf den B-Plätzen. Der Widerstand des Keramikmaterials wird durch geeignete Kombination dieser Bestandteile eingestellt. Die Einstellung des Widerstandes kann durch das "Verdünnen" des Cr durch den Einbau von L und gegebenenfalls zusätzlich noch von R sowie von $R^2 = Zn^{II}$ bzw. $Ge^{IV}$ und/oder $Sn^{IV}$ auf den B-Plätzen der Keramik erfolgen. Die für R und L und $R^2$ gewählten Elemente weisen vorzugsweise eine Ladungstransportindifferenz auf, d.h. sie sind im Kristallgitter des Keramikmaterials auf eine Oxidationsstufe festgelegt. Cr hingegen kann seine Oxidationsstufen wechseln. Der Ladungstransport ist im gesamten Temperaturbereich auf die Polaronen-Platzwechselprozesse des Cr beschränkt. Über den Verdünnungseffekt hinaus tragen $Zn^{II}$ und $R^{2\,IV} = Ge$, Sn infolge Verbreiterung der Schwankungen des Gitterpotentials zur Erhöhung der B-Konstanten bei, wobei die Einführung weiterer Übergangsmetallkationen mit gemischter Valenz, die bei hoher Temperatur unvorteilhaft zum Ladungstransport beitragen würden, vermieden wird.

In einer weiteren Ausführungsform der Erfindung steht SE für ein oder mehrere Elemente ausgewählt aus: Y, Ce, Sm, Eu, Gd, Tb, Dy, Ho, Er, Yb, Lu. Hierbei ist Y bevorzugt.

Diese Seltenerdmetalle zeichnen sich alle dadurch aus, dass sie in der Oxidationsstufe +III stabil sind. Unter Seltenerdmetallen sind im Zusammenhang mit dieser Erfindung die Elemente mit den Ordnungszahlen 39 und 57-71 zu verstehen.

In einer weiteren Ausführungsform der Erfindung steht SE für genau ein Seltenerdmetall.

In einer weiteren Ausführungsform der Erfindung steht $M^{II}$ für ein oder mehrere Elemente ausgewählt aus: Mg, Ca, Sr. Hierbei sind Ca und Sr bevorzugt. Die Elemente Mg, Ca und Sr liegen in der Oxidationsstufe +11 vor. Für Keramikmaterialien mit Ca und/oder Sr als $M^{II}$ konnten in Kombination mit L = Al und/oder Ga unter Hinzufügen von Zn bzw. Ge und/oder Sn sehr gute Werte für den Widerstand und die B-Konstante einschließlich einer hohen Alterungsstabilität erzielt werden.

In einer weiteren Ausführungsform der Erfindung steht $M^{II}$ für genau ein Element.

Für Keramikmaterialien in denen entweder Ca oder Sr als $M^{II}$ gewählt wurde konnten in Kombination mit L = Al und/oder Ga unter Hinzufügen von Zn bzw. Ge und/oder Sn sehr gute Werte für den Widerstand und die B-Konstante sowie eine hohe Alterungsstabilität erzielt werden.

In einer weiteren Ausführungsform der Erfindung steht R für Fe, oder eine Metallkombination, welche Fe umfasst. Für Keramikmaterialien mit Fe als R konnten in Kombination mit L = Al und/oder Ga gegebenenfalls unter Hinzufügen von Zn bzw. Ge und/oder Sn sehr gute Werte für den Widerstand und die B-Konstante sowie eine hohe Alterungsstabilität erzielt werden.

In einer weiteren Ausführungsform der Erfindung steht R für Zn, oder eine Metallkombination, welche Zn umfasst.

In einer weiteren Ausführungsform der Erfindung steht R für Ge, oder eine Metallkombination, welche Ge umfasst.

In einer weiteren Ausführungsform der Erfindung steht R für Sn, oder eine Metallkombination, welche Sn umfasst.

Die Erfinder haben erkannt, dass ein Keramikmaterial für die Temperaturmessung im Temperaturbereich von Raumtemperatur (~25°C) bis 1000°C mit hoher Langzeitstabilität bereitgestellt werden kann, wenn nur ein Element mit gemischter Valenz, beispielsweise $Cr^{III}/Cr^{IV}$, am Leitungsmechanismus teilnimmt und auf weitere Redoxpaare wie beispielsweise $Mn^{III}/Mn^{IV}$ verzichtet wird. Dadurch ist ein einheitlicher, nahezu konstanter B-Wert über den gesamten Temperaturbereich gegeben, der Widerstand kann nun durch partielle Substitution von Cr durch ein redoxstabiles Kation wie $Al^{III}$ oder $Ga^{III}$ eingestellt und durch zusätzlichen Einbau der gleichfalls redoxstabilen Kationen von Zn bzw. Ge und/oder Sn auf den B-Plätzen des Perowskitgitters auf bestimmte Werte abgestimmt werden, für den Koeffizient z muss jedoch gelten $0,5 < z$, um die Widerstandsanforderungen zu erfüllen. Auf diese Weise wird der Einbau von mehreren, verschiedenen Übergangsmetallkationen mit gemischter Valenz vermieden und zugleich eine hinreichende Variation im Gitterpotential zur Einstellung einer ausreichend großen B-Konstante gewährleistet.

Das Keramikmaterial lässt sich durch die allgemeine Formel $ABO_3$ des Perowskitstrukturtyps beschreiben, wobei $SE^{III}$ und $M^{II}$ auf den A-Plätzen angeordnet sind und Cr, L und gegebenenfalls R sowie Zn bzw. Ge und/oder Sn auf den B-Plätzen. Durch den Einbau der zweiwertigen Kationen $M^{II}$ auf A-Plätzen wird nach dem Prinzip der gelenkten Valenz die Bildung von $Cr^{IV}$ auf den B-Plätzen induziert, die zusammen mit $Cr^{III}$ ein Redoxpaar bilden, sodass eine hohe Polaronenleitfähigkeit zustande kommt. Da nur benachbarte $Cr^{III}/Cr^{IV}$-Paare an der elektrischen Leitung teilnehmen, kann der spezifische Widerstand durch den Einbau redoxstabiler Kationen L ($Al^{III}$ oder $Ga^{II}$) auf den B-Plätzen des Perowskitgitters, die die Konzentration der Polaronen "verdünnen", eingestellt werden, wobei durch den Einbau von Zn bzw. Ge und/oder Sn zusätzlich eine Feineinstellung gelingt. Die Elemente $Al^{III}$ und/oder $Ga^{III}$ sowie die Einfügung von $Zn^{II}$ bzw. $Ge^{IV}$ und/oder $Sn^{IV}$ und ebenso die auf den A-Plätzen eingebauten Seltenerdmetalle $SE^{III}$ und die Metalle $M^{II}$ sind auf eine Oxidationsstufe +III bzw. +11 bzw. +IV festgelegt und tragen daher nicht zu Polaronen-Platzwechselprozessen bei.

Mit $Y^{III}$ für $SE^{III}$ und $Ca^{II}$ für $M^{II}$ wurden in Kombination mit L = Al und/oder Ga unter Hinzufügen von Zn bzw. Ge und/oder Sn sehr gute Werte für den Widerstand und die B-Konstante erzielt.

In einer weiteren Ausführungsform steht R für genau ein Metall ausgewählt aus Fe, Zn, Ge, Sn.

In einer weiteren Ausführungsform der Erfindung steht $SE^{III}$ für genau ein Seltenerdmetall der Oxidationsstufe +III. Für die Wahl $Fe^{III}$ als $R^{III}$ wird das im Bereich von 400 bis 500°C einsetzende Abbiegen der Widerstands-Temperatur-Kennlinie in Richtung auf einen steileren Verlauf, d. h. mit größerer B-Konstante, nicht beobachtet. Daraus kann geschlossen werden, dass $Fe^{III}$ unter den geforderten Bedingungen redoxstabil ist. Somit liegt Cr als einziger Bestandteil in zwei unterschiedlichen Oxidationsstufen vor. Der Polaronen-Platzwechselprozess ist somit auf das Cr beschränkt. Der Anteil an $Cr^{IV}$ im Keramikmaterial wird nach dem Prinzip der gelenkten Valenz über den Anteil $M^{II}$ gesteuert und durch Zugabe von Zn fein abgestimmt. Das in der Ausgangs-Rohstoffmischung als $Cr^{III}$ vorliegende Cr wird bei der Herstellung der Keramik durch den Luftsauerstoff oxidiert.

In einer weiteren Ausführungsform der Erfindung gilt für den Parameter x: $0,03 \leq x \leq 5\ 0,5$, wobei der Bereich $0,05 < x < 0,25$ bevorzugt ist.

In einer weiteren Ausführungsform der Erfindung gilt für den Parameter y: $0 < y < 0,5$, wobei der Bereich $0,005 < y < 0,25$ bevorzugt ist.

In einer weiteren Ausführungsform der Erfindung gilt für den Parameter z: $0,5 < z < 0,9$, wobei der Bereich $0,70 < z < 0,90$ bevorzugt ist. In einer weiteren Ausführungsform der Erfindung gilt für die Parameter y und z: $0,10 < (1-y-z) < 0,20$ bevorzugt ist.

In einer weiteren Ausführungsform der Erfindung gilt für die Parameter p bzw. r: $0,001 < r < 0,05$ im Fall p = 0 und $0,001 < p < 0,05$ im Fall r = 0.

Für Keramikmaterialien mit diesen Parametern konnten sehr gute Werte für den Widerstand und die B-Konstante erzielt werden.

In einer weiteren Ausführungsform der Erfindung ist das Keramikmaterial als phasenhomogenes Perowskit-Mischkristallsystem der allgemeinen Formel $ABO_3$ ausgebildet.

Die Kristallstruktur von Perowskit kann auf zwei verschiedene Arten beschrieben werden.

Die B-Atome werden jeweils von sechs Sauerstoffatomen in der Gestalt von Oktaedern umgeben. Diese $[BO_6]$-Oktaeder bilden über gemeinsame Ecken ein dreidimensionales Netzwerk. In den Lücken dieses Netzwerks befinden sich die A-Atome, die eine Koordinationssphäre aus zwölf Sauerstoffatomen in Form eines Kuboktaeders als Koordinationspolyeder besitzen.

Alternativ kann die Struktur auch als kubisch dichteste Kugelpackung beschrieben werden, die gemeinsam von A-Atomen und Sauerstoff aufgebaut wird. Jede vierte Oktaederlücke der Kugelpackung ist dabei von B-Atomen besetzt.

Bei dem Keramikmaterial kann es sich um einen Heißleiter-Widerstandsmaterial handeln, also ein leitendes Material, welches bei hohen Temperaturen dem Strom besser leitet, als bei tiefen Temperaturen. Der Widerstand des Materials sinkt also mit steigenden Temperaturen.

Der Polaronen-Platzwechsel-Prozess erfolgt über ein so genanntes "Hopping" zwischen unterschiedlichen Oxidationsstufen von nicht-redoxstabilen Übergangsmetallkationen. Läge neben $Cr^{III}/Cr^{IV}$ noch eine weiteres nicht redoxstabiles Element E in den Oxidationsstufen +III und +IV vor, so könnte das Hopping nicht nur zwischen $Cr^{III}/Cr^{IV}$ und $E^{III}/E^{IV}$ erfolgen, sondern auch zwischen $E^{III}/Cr^{IV}$ oder $Cr^{III}/E^{IV}$. Durch die Limitierung des Hopping auf ein Element, in diesem Fall Cr, wird der mittlere Hoppingabstand erhöht was zu einer Abnahme der Strompfade und einer Erhöhung des Widerstandes führt. Die Erfinder haben erkannt, dass die Anwesenheit eines weiteren nichtredoxstabilen Elements E welches zum Polaronen-Hopping beitragen kann, dazu führen würde, dass beispielsweise für Mn als E im Bereich von 400°C bis 500°C die Widerstands - Temperatur-Kennlinie einen steileren Verlauf annehmen würde und somit eine größere B-Konstante vorliegen würde. Dies hätte zur Folge, dass bei 1000°C für eine Temperaturmessung ein zu niedriger Widerstandswert vorliegen würde, beispielsweise von nur einigen $\Omega$cm, wenn man den Widerstand bei Raumtemperatur auf nicht mehr als $\approx 10^6$ $\Omega$cm einstellt. Durch das Unterbinden zusätzlicher Hopping-Wege durch Weglassen weiterer nicht-redoxstabiler Metalle neben dem Cr kann der steile Verlauf der Widerstands-Temperatur-Kennlinie in diesem Temperaturbereich unterbunden werden, was dazu führt, dass der angestrebte Widerstand von mindestens einigen zehn $\Omega$cm bei 1000°C auch dann erreicht wird, wenn der Widerstand bei Raumtemperatur auf nicht mehr als $\approx 10^6$ $\Omega$cm eingestellt wird.

Ein wesentlicher erfinderischer Schritt bei manchen Ausführungsformen der Erfindung liegt in der Erkenntnis, dass die Präsenz von mehreren verschiedenen Redoxpaaren, z.B. von $Cr^{III}$ und $Cr^{IV}$ neben beispielsweise $Mn^{III}$ und $Mn^{IV}$, für eine zusätzliche Aktivierung von Polaronen-Platzwechselprozessen von $Cr^{III}$ nach $Mn^{IV}$ oder von $Mn^{III}$ nach $Cr^{IV}$, verantwortlich ist, die im Bereich von 400 bis 500°C einsetzt und e

in Abbiegen der Widerstands-Temperatur - Kennlinie in Richtung auf einen steileren Verlauf, d.h. mit größerer B-Konstante, hervorruft. Es resultieren daraus bei 1000°C für eine Temperaturmessung zu niedrige Widerstandswerte von nur einigen $\Omega$cm, wenn man den Widerstand bei Raumtemperatur auf nicht mehr als ca. $10^6$ $\Omega$cm einstellt.

Folgerichtig ist die Einschränkung auf nur ein Redoxpaar, z.B. $Cr^{III}$ und $Cr^{IV}$ als Basis für einen Polaronen-Transportprozess in einem Perowskit-Mischkristallsystem der genannten formelmäßigen Zusammensetzungen mit einer Vermeidung des Einmündens der Widerstands-Temperatur - Kennlinie in einen steileren Verlauf im Hochtemperaturbereich verbunden, so dass der angestrebte elektrische Widerstand von mindestens einigen zehn $\Omega$cm bei 1000°C auch dann eingehalten werden kann, wenn der Widerstand bei Raumtemperatur auf nicht mehr als ca. $10^6$ $\Omega$cm eingestellt wurde.

Das Wesen von Ausführungsformen der Erfindung besteht bei Wahrung einer den gesetzten Anforderungen entsprechenden Langzeitstabilität und Alterungsstabilität bis zu 1000°C in der Herbeiführung eines flacheren Verlaufs der Widerstands-Temperatur-Kennlinie im Perowskit-Mischkristallsystem $ABO_3$ durch Ausschluss eines zweiten Redoxpaares, wobei der Beitrag eines zweiten Redoxpaares zur Variation der potentiellen Energie an den Gitterplätzen der Polaronen durch den Zusatz von $Zn^{II}$ bzw. von $Ge^{IV}$ und/oder $Sn^{IV}$ übernommen wird und dadurch eine noch hinreichende Empfindlichkeit der Temperaturmessung bestehen bleibt.

Neben dem Keramikmaterial selbst wird auch ein Verfahren zur Herstellung des Keramikmaterials beansprucht.

Eine Variante des Verfahrens zur Herstellung eines Keramikmaterials nach einem der zuvor beschriebenen Ausführungsformen umfasst die Verfahrensschritte: A) Mischen der folgenden Verbindungen: $SE_2O_3$, $M^{II}CO_3$, $Cr_2O_3$, $L_2O_3$ und ein Oxid von R, so dass ein Gemisch entsteht, B) Sintern des unter A) gefertigten Gemisches.

In einem ersten Verfahrensschritt A) werden die Ausgangsstoffe $SE_2O_3$, $M^{II}CO_3$, $Cr_2O_3$, $L_2O_3$ und das Oxid von R gemischt. Cr wird hierbei als $Cr_2O_3$ zugegeben, also in einer Verbindung, in der es als $Cr^{III}$ vorliegt. Erst im zweiten Verfahrensschritt B), dem Sintern, mit den anderen Ausgangsstoffen, unter denen sich auch $M^{II}CO_3$ befindet, wird $Cr^{III}$, gelenkt durch den Gehalt an $M^{II}$, durch den Luftsauerstoff zu einem äquivalenten Teil zu $Cr^{IV}$ oxidiert. Somit wird im gesinterten Perowskit-Mischkristallsystem Ladungsneutralität (Äquivalenz der positiven Kationenladungen und der negativen Oxidionenladungen) erreicht.

In einer weiteren Verfahrensvariante werden die Ausgangssubstanzen aus einer wässrigen Phase ausgefällt, getrocknet und anschließend gesintert.

In einer weiteren Verfahrensvariante wird das Gemisch aus den Ausgangsmaterialien vor dem Verfahrensschritt B) noch kalziniert. Die Temperatur für das Kalzinieren liegt hierbei zwischen 1000°C und 1300°C, wobei der Bereich zwischen 1050°C und 1200°C bevorzugt ist.

In einer weiteren Verfahrensvariante wird das kalzinierte Material vor dem Verfahrensschritt B) noch gemahlen. Die durch das Mahlen erhaltenen Körner können hier eine Korngröße $d_{50}$ von etwa einem Mikrometer aufweisen. Die Korngröße $d_{50}$ gibt die Größe an, welche etwa 50% der Körner haben.

In einer weiteren Verfahrensvariante folgt auf das zuvor beschriebene Mahlen noch ein Feinmahlschritt. Danach kann die Korngröße $d_{50}$ in einem Bereich von 0,3 bis 1 Mikrometer liegen.

In einer weiteren Verfahrensvariante wird durch das Sintern im Verfahrensschritt B) ein phasenhomogenes Perowskit-Mischkristallsystem ausgebildet. Dieses stellt eine einheitliche Phase dar, welches durch die allgemeine Formel $ABO_3$ beschrieben werden kann.

In einer weiteren Verfahrensvariante erfolgt das Sintern im Verfahrensschritt B) bei einer Temperatur von 1400°C bis 1600°C, wobei ein Temperaturbereich von 1550°C bis 1600°C bevorzugt ist, um eine hinreichende Sinterverdichtung von mindestens 90% der theoretischen Dichte zu erreichen.

Neben dem Keramikmaterial wird auch ein elektrokeramisches Bauelement beansprucht, welches das Keramikmaterial umfasst.

Eine Ausführungsform des Bauelements umfasst ein keramisches Material nach einem der zuvor beschriebenen Ausführungsformen.

In einer weiteren Ausführungsform des Bauelements umfasst dieses einen Grundkörper, der ein keramisches Material nach einem der zuvor beschriebenen Ausführungsformen umfasst, sowie elektrisch leitfähige Kontaktierungen auf der Oberfläche des Grundkörpers. Die elektrischen leitfähigen Kontaktierungen können beispielsweise Platin umfassen.

Eine Ausführungsform des Bauelements kann hierbei so ausgestaltet sein, dass es sich zur Temperaturmessung eignet.

Da es sich bei dem Keramikmaterial um ein NTC-Material handeln kann, ist es beispielsweise für den Einsatz in Temperaturfühlern geeignet. Das Bauelement kann somit beispielsweise als Thermistor ausgestaltet sein. Dieser Thermistor kann beispielsweise für Temperaturmessungen in Temperaturbereichen bis 1000°C eingesetzt werden. Das Bauelement kann beispielsweise so ausgeformt sein, dass es sich als Abgassensor für Verbrennungsmotoren, Partikelfilter oder Katalysatoren eignet.

Thermistoren, die ein erfindungsgemäßes Keramikmaterial umfassen, weisen keine bzw. nur eine verminderte zeitliche Drift der Kennlinie auf und sind damit auch bei höheren Temperaturen hinreichend alterungsstabil. Zugleich weisen sie messtechnisch vorteilhafte Widerstände bei Raumtemperatur von $< 10^6$ $\Omega cm$ und bei 1000°C von einigen zehn $\Omega cm$ auf, ohne dass die B-Konstante und damit auch zugleich die Empfindlichkeit zu stark herabgemindert wird.

Es werden im Folgenden die acht verschiedenen Keramikmaterialien A bis H betrachtet, wobei die Keramikmaterialien A bis F Ausführungsformen eines erfindungsgemäßen Keramikmaterials betreffen, wohingegen die Keramikmaterialien G und H nicht erfindungsgemäße Vergleichsbeispiele sind:

A $[Y_{0,95}Ca_{0,05}]$ $[Cr^{III}_{0,09}Cr^{IV}_{0,055}$ $Zn^{II}0,005Al^{III}0,85]O_3$
B $[Y_{0,95}Ca_{0,05}]$ $[Cr^{III}_{0,08}Cr^{IV}_{0,06}$ $Zn^{II}_{0,01}AlII_{0,85}]O_3$
C $[Y_{0,945}Ca_{0,055}]$ $[Cr^{III}_{0,10}Cr^{IV}_{0,05}$ $Ge^{IV}_{0,005}Al^{III}_{0,845}]O_3$
D $[Y_{0,94}Ca_{0,06}]$ $[Cr^{III}_{0,10}Cr^{IV}_{0,05}Ge^{IV}_{0,01}Al^{III}_{0,84}]O_3$
E $[Y_{0,945}Ca_{0,055}]$ $[$ $Cr^{III}_{0,10}Cr^{IV}_{0,05}Sn^{IV}_{0,005}Al^{III}_{0,845}]O_3$
F $[Y_{0,94}Ca_{0,06}]$ $[Cr^{III}_{0,10}Cr^{IV}_{0,05}$ $Sn^{IV}_{0,01}Al^{III}_{0,84}]O_3$
G: $[Y_{0,97}Ca_{0,03}]$ $[Cr^{III}_{0,12}Cr^{IV}_{0,03}Fe^{III}_{0,85}]O_3$
H: $[Y_{0,97}Ca_{0,03}]$ $[Cr^{III}_{0,12}Cr^{IV}_{0,03}$ $Mn^{III}_{0,085}$ $Al^{III}_{0,765}]O_3$ bzw. $[Y_{0,97}Ca_{0,03}]$ $[Cr^{III}_{0,15}Mn^{IV}_{0,03}$ $Mn^{III}_{0,055}$ $Al^{III}_{0,765}]O_3$

Die nicht erfindungsgemäße Zusammensetzung H lässt sich hierbei durch zwei Grenzstrukturen beschreiben, da sich Cr und Mn gegenseitig reduzieren bzw. oxidieren können. Es findet somit ein Übergang der Oxidationsstufe +III zu +IV des einen Elements in Kombination mit dem Übergang von +IV auf +III des anderen der beiden Elemente statt.

Die erfindungsgemäßen Zusammensetzungen A bis F stellen dabei ein Keramikmaterial mit einem negativen Temperaturkoeffizienten dar, das bei hoher thermischer Stabilität und Alterungsstabilität bis zu 1000°C zugleich die Forderung nach messtechnisch vorteilhaften Widerstandswerten von maximal ca. $10^6$ $\Omega cm$ bei Raumtemperatur und mindestens einigen zehn $\Omega cm$ bei 1000°C erfüllt, ohne dass die B-Konstante und dadurch auch die Empfindlichkeit zu stark herabgemindert wird.

Zur Herstellung der Pulver der Keramikmaterialien wurden jeweils verwendet (Angaben in Gew.-%):

A: 64, 22% $Y_2O_3$, 3,00% $CaCO_3$, 6,60% $Cr_2O_3$, 0,24% ZnO, 25,94% $Al_2O_3$
B: 64,21% $Y_2O_3$, 3,00% $CaCO_3$, 6,37% $Cr_2O_3$, 0,49% ZnO, 25,94% $Al_2O_3$
C: 63,81% $Y_2O_3$, 3,29% $CaCO_3$, 6,82% $Cr_2O_3$, 0,31% $GeO_2$, 25,76% $Al_2O_3$
D: 63,40% $Y_2O_3$, 3,59% $CaCO_3$, 6,81% $Cr_2O_3$, 0,63% $GeO_2$, 25,58% $Al_2O_3$
E: 63,72% $Y_2O_3$, 3,29% $CaCO_3$, 6,81% $Cr_2O_3$, 0,45% $SnO_2$, 25,73% $Al_2O_3$
F: 63,22% $Y_2O_3$, 3,58% $CaCO_3$, 6,79% $Cr_2O_3$, 0,90% $SnO_2$, 25,51% $Al_2O_3$
G: 57,10% $Y_2O_3$, 1,57% $CaCO_3$, 5,94% $Cr_2O_3$, 35,39% $Fe_2O_3$
H: 64,56% $Y_2O_3$, 1,77% $CaCO_3$, 6,72% $Cr_2O_3$, 22,99% $Al_2O_3$, 3,96% $Mn_2O_3$

Die jeweiligen Ausgangsstoffe wurden mit 200 bis 300 g deionisiertem Wasser eingewogen und vorgemahlen. Nach dem Trocknen erfolgte eine erste Kalzinierung des Pulvers für vier Stunden bei 1050°C bis 1150°C. Die darauf folgende Hauptmahlung der wässrigen Suspension erfolgte mit Yttriumstabilisierten Zirkoniumkugeln, wobei eine Zielgröße $d_{50}$ kleiner 1,5 $\mu m$ erreicht wurde. Nach erneutem Trocknen und einer zweiten Kalzinierung des Pulvers bei 1100°C bis 1200°C für vier Stunden erfolgte eine Feinmahlung auf eine Korngröße $d_{50}$ kleiner 0,8 $\mu m$.

Zur Herstellung von Probekörpern wird das Keramikpulver mit einem Binder vermischt und in einen Schlicker überführt und dieser entweder durch Sprühen zu einem rieselfähigen Pressgranulat zwecks anschließender Fertigung von scheibenförmigen Presslingen verarbeitet oder einem Folienziehprozess zugeführt, um nach dem Laminieren Wafer herzustellen.

Die elektrische Anbindung an die NTC-Keramik wird durch Aufbringen einer Pt-Paste als elektrische Kontaktfläche im Siebdruck auf die beiden Hauptoberflächen der scheibenförmigen Probe bzw. des Wafers vorgenommen. Danach werden mittels Ko-Sinterung sowohl die elektrischen Kontaktflächen in den keramischen Grundkörper eingebrannt als auch das Keramikmaterial gesintert. Die Sinterung erfolgt nach üblicher Entbinderung bei bis zu 1600°C mit einer Haltezeit von 1 bis 3 Stunden.

Die Beständigkeit der so hergestellten NTC-Bauelemente wird durch Widerstandsmessungen in stabilen Temperaturbereichen bewertet und die elektrischen Alterungsdriften während entsprechender Hochtemperaturlagerungen sowie durch zyklische Aufnahme der Kennlinie bis zu 1000°C belegt. Zur Bestimmung der elektrischen Parameter wurden zylindrische Keramikproben mit einem Durchmesser von 5,5 mm und einer Höhe von jeweils 1,5 mm mit elektrisch leitfähigen Platin-Kontaktflächen versehen.

Für die erfindungsgemäßen Ausführungsbeispiele A bis F sind die elektrischen Eigenschaftswerte $\rho_{25°C}$, $B_{25/100°C}$ und $B_{300/1000°C}$ in Tabelle 1 angegeben.

Tabelle 1:

| Probe | Zusammensetzung | $\rho_{25\downarrow X}$ [k$\Omega$ cm] | $B_{25/100}$ [K] | $B_{300/1000}$ [K] |
|---|---|---|---|---|
| A | $[Y_{0,95}Ca_{0,05}][Cr^{III}_{0,09}Cr^{IV}_{0,055}Zn^{II}_{0,005}Al^{III}_{0,85}]O_3$ | 32,4 | 2905 | 3063 |
| B | $[Y_{0,95}Ca_{0,05}][Cr^{III}_{0,08}Cr^{IV}_{0,06}Zn^{II}_{0,01}Al^{III}_{0,85}]O_3$ | 38,8 | 2934 | 3100 |
| C | $[Y_{0,945}Ca_{0,055}][Cr^{III}_{0,10}Cr^{IV}_{0,05}Ge^{IV}_{0,005}Al^{III}_{0,845}]O_3$ | 32,4 | 2943 | 3082 |
| D | $[Y_{0,94}Ca_{0,06}][Cr^{III}_{0,10}Cr^{IV}_{0,05}Ge^{IV}_{0,01}Al^{III}_{0,84}]O_3$ | 43,2 | 3013 | 3120 |
| E | $[Y_{0,945}Ca_{0,055}][Cr^{III}_{0,10}Cr^{IV}_{0,05}Sn^{IV}_{0,005}Al^{III}_{0,845}]O_3$ | 30,7 | 2926 | 3066 |
| F | $[Y_{0,94}Ca_{0,06}][Cr^{III}_{0,10},Cr^{IV}_{0,05}Sn^{IV}_{0,01}Al^{III}_{0,84}]O_3$ | 38,6 | 2968 | 3131 |
| G | $[Y_{0,97}Ca_{0,03}][Cr^{III}_{0,122}Cr^{IV}_{0,03}Fe^{III}_{0,85}]O_3$ | 3,3 | 2590 | 3688 |
| H | $[Y_{0,97}Ca_{0,03}][Cr^{III}_{0,12}Cr^{IV}_{0,03}Mn^{III}_{0,085}Al^{III}_{0,765}]O_3$ bzw. $[Y_{0,97}Ca_{0,03}][Cr^{III}_{0,15}Mn^{IV}_{0,03}Mn^{III}_{0,055}Al^{III}_{0,765}]O_3$ | > $10^8$ | - | 7468 |

Von den Keramikproben B und D wurden jeweils in drei Messzyklen die Widerstände und B-Konstanten erfasst und der Temperaturverlauf verglichen, um die Alterungsstabilität zu bewerten. Die erhaltenen Messwerte sind in den Tabellen 2a-c für B und in den Tabellen 3a-c entsprechend für D dargestellt. Das Auf- und Abheizen erfolgte hierbei stufenweise mit Wartezeiten von mindestens 30 Minuten.

**Tabelle 2a: Probe B**

| | $\rho_{T\downarrow X}$ / $\Omega$cm: 1. Zyklus | | | | | | |
|---|---|---|---|---|---|---|---|
| Temp. °C | 300 | 500 | 800 | 1000 | 800 | 500 | 300 |
| $\rho_{Probe\,1}$ | 265,40 | 62,54 | 20,64 | 13,41 | 20,60 | 62,24 | 262,89 |
| $\rho_{Probe\,2}$ | 265,72 | 62,60 | 20,67 | 13,42 | 20,63 | 62,33 | 263,40 |
| Probe 1 | $B_{300/1000°C}$ = 3112 K | | | $B_{300/1000°C}$ = 3102 K | $\Delta B$ = -0,32% $\Delta\rho_{300\downarrow X}$ = -1,0% | | |
| Probe 2 | $B_{300/1000°C}$ = 3112 K | | | $B_{300/1000°C}$ = 3103 K | $\Delta B$ = -0,29% $\Delta\rho_{300\downarrow X}$ = -0,9% | | |

**Tabelle 2b: Probe B**

| | $\rho_{T\downarrow X}$ / Ωcm: 2. Zyklus | | | | | | |
|---|---|---|---|---|---|---|---|
| Temp. °C | 300 | 500 | 800 | 1000 | 800 | 500 | 300 |
| $\rho_{Probe\,1}$ | 262,89 | 62,24 | 20,60 | 13,40 | 20,58 | 62,12 | 262,02 |
| $\rho_{Probe\,2}$ | 263,40 | 62,33 | 20,62 | 13,41 | 20,61 | 62,21 | 262,50 |
| Probe 1 | $B_{300/1000°C}$ = 3103 K | | | | $B_{300/1000°C}$ = 3099 K | ΔB = -0,11%<br>$\Delta\rho_{300\downarrow X}$ = -0,3% | |
| Probe 2 | $B_{300/1000°C}$ = 3104K | | | | $B_{300/1000°C}$ = 3100 K | ΔB = -0,11%<br>$\Delta\rho_{300\downarrow X}$ = -0,3% | |

**Tabelle 2c: Probe B**

| | $\rho_{T\downarrow X}$ / Ωcm: 3. Zyklus | | | | | | |
|---|---|---|---|---|---|---|---|
| Temp. °C | 300 | 500 | 800 | 1000 | 800 | 500 | 300 |
| $\rho_{Probe\,1}$ | 262,02 | 62,12 | 20,58 | 13,40 | 20,56 | 62,04 | 261,47 |
| $\rho_{Probe\,2}$ | 262,50 | 62,20 | 20,60 | 13,41 | 20,59 | 62,14 | 262,00 |
| Probe 1 | $B_{300/1000°C}$ = 3100 K | | | | $B_{300/1000°C}$ = 3101 K | ΔB = -0,07%<br>$\Delta\rho_{300\downarrow X}$ = -0,2% | |
| Probe 2 | $B_{300/1000°C}$ = 3097 K | | | | $B_{300/1000°C}$ = 3099 K | ΔB = -0,06%<br>$\Delta\rho_{300\downarrow X}$ = -0,2% | |

**Tabelle 3a: Probe D**

| | $\rho_{T\downarrow X}$ / Ωcm: 1. Zyklus | | | | | | |
|---|---|---|---|---|---|---|---|
| Temp. °C | 300 | 500 | 800 | 1000 | 800 | 500 | 300 |
| $\rho_{Probe\,1}$ | 258,95 | 59,99 | 19,65 | 12,70 | 19,60 | 59,65 | 256,11 |
| $\rho_{Probe\,2}$ | 256,69 | 59,38 | 19,43 | 12,56 | 19,36 | 58,88 | 252,51 |
| Probe 1 | $B_{300/1000°C}$ = 3143K | | | | $B_{300/1000°C}$ = 3131 K | ΔB = -0,37%<br>$\Delta\rho_{300\downarrow X}$ = -1,1% | |
| Probe 2 | $B_{300/1000°C}$ = 3145 K | | | | $B_{300/1000°C}$ = 3128 K | ΔB = -0,55%<br>$\Delta\rho_{300\downarrow X}$ = -1,7% | |

**Tabelle 3b: Probe D**

| | $\rho_{T\downarrow X}$ / Ωcm: 2. Zyklus | | | | | | |
|---|---|---|---|---|---|---|---|
| Temp. °C | 300 | 500 | 800 | 1000 | 800 | 500 | 300 |
| $\rho_{Probe\,1}$ | 256,11 | 59,64 | 19,60 | 12,69 | 19,57 | 59,45 | 254,50 |
| $\rho_{Probe\,2}$ | 252,51 | 58,87 | 19,36 | 12,54 | 19,32 | 58,63 | 250,48 |
| Probe 1 | $B_{300/1000°C}$ = 3132 K | | | | $B_{300/1000°C}$ = 3126 K | ΔB = -0,21%<br>$\Delta\rho_{300\downarrow X}$ = -0,6% | |
| Probe 2 | $B_{300/1000°C}$ = 3130 K | | | | $B_{300/1000°C}$ = 3121 K | ΔB = -0,27%<br>$\Delta\rho_{300\downarrow X}$ = -0,8% | |

**Tabelle 3c: Probe D**

| Temp. °C | $\rho_{T\downarrow X}$ / Ωcm: 3.Zyklus | | | | | | |
|---|---|---|---|---|---|---|---|
| | 300 | 500 | 800 | 1000 | 800 | 500 | 300 |
| $\rho_{Probe\,1}$ | 254,50 | 59,45 | 19,56 | 12,68 | 19,55 | 59,34 | 253,54 |
| $\rho_{Probe\,2}$ | 250,48 | 58,63 | 19,32 | 12,53 | 19,30 | 58,50 | 249,39 |
| Probe 1 | $B_{300/1000°C}$ = 3127 K | | | | $B_{300/1000°C}$ = 3123 K   $\Delta B$ = -0,13%   $\Delta\rho_{300\downarrow X}$ = -0,4% | | |
| Probe 2 | $B_{300/1000°C}$ = 3122 K | | | | $B_{300/1000°C}$ = 3118 K   $\Delta B$ = -0,15%   $\Delta\rho_{300\downarrow X}$ = -0,4% | | |

Den Tabellen kann man entnehmen, dass die größten Änderungen für $B_{300/1000}$ und $\rho_{300}$ ($\Delta B$ und $\Delta\rho$) im 1. Zyklus auftreten, diese dann aber in der Folge abnehmen, was eine notwendige Voralterung anzeigt. Die Ergebnisse belegen, dass die anfangs festgestellte Drift durch eine geeignete, gegebenenfalls zyklisch ausgeführte Voralterung beseitigt werden kann.

Im Folgenden werden Ausführungsbeispiele der Erfindung anhand von Figuren erläutert

Figur 1 zeigt einen Arrhenius-Plot des Kennlinienverlaufs für die erfindungsgemäßen Keramiken A bis F, sowie für Proben der nicht erfindungsgemäßen Verbindungen G und H.

Figur 2 zeigt eine schematische Seitenansicht einer Ausführungsform des elektrokeramischen Bauelements.

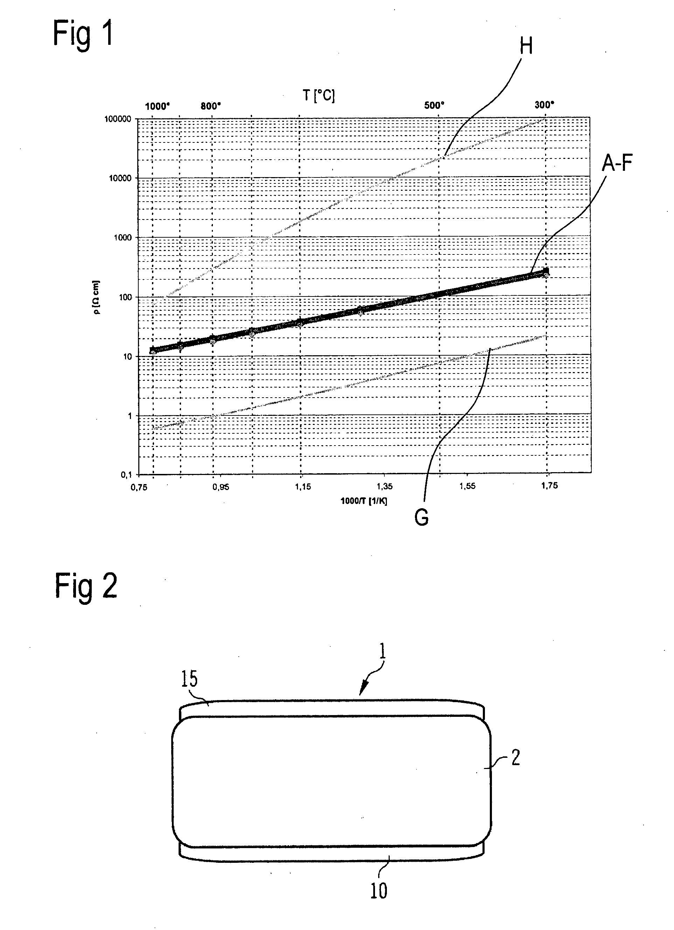

Die Figur 1 zeigt im Arrhenius-Plot den Kennlinienverlauf des spezifischen Widerstands p in Ωcm zwischen 300°C und 1000°C für die erfindungsgemäßen Ausführungsbeispiele A bis F sowie für die nicht erfindungsgemäßen Beispiele, die im Fall G gleichfalls nur ein Redoxpaar $Cr^{III}/Cr^{IV}$ aufweisen und die nicht erfindungsgemäße Probe H, welche zusätzlich noch das Redoxpaar $Mn^{III}/Mn^{IV}$ umfasst. Hierbei ist die Größe 1000/T über dem Logarithmus des spezifischen Widerstandes p aufgetragen, wobei T die absolute Temperatur in Kelvin bezeichnet. Zur Orientierung ist an der Oberseite eine weitere Skala angegeben, von dieser aus Hilfslinien in das Diagramm gezogen wurden. Bei dieser Skala handelt es sich um eine Temperaturskala, welche die Temperatur in °C angibt.

Die Widerstands-Temperatur-Kennlinie zeigt für die erfindungsgemäßen Ausführungsbeispiele A bis F den gewünschten flachen Verlauf bei gleichzeitiger Gewährleistung einer noch hinreichenden Empfindlichkeit sowie gleichzeitiger Wahrung der gesetzten Anforderungen und die Langzeitstabilität und Alterungsstabilität. Dies lässt sich auch den Tabellen 2a-c und 3a-c entnehmen.

Die Kennlinien zeigen, dass sich die nicht erfindungsgemäße Probe H aufgrund der großen Steilheit der Kennlinie (vergleichsweise hohe B-Konstante) nicht für eine technische Anwendung als NTC-Materialien in einem Temperaturbereich von 25°C bis 1000°C eignen: Der Widerstand bei Raumtemperatur liegt um Größenordnungen über Werten von $10^6$ Ωcm, die für die praktische Anwendung in Betracht kommen.

Man erkennt aus Figur 1, dass die Probe der nicht erfindungsgemäßen Keramik H im Bereich zwischen 800 und 1000°C eine größere Kennliniensteilheit (und damit einen größeren B-Wert) aufweisen als im Bereich von 300-500°C, was zu Widerständen führt, die für eine Thermistoranwendung bis Raumtemperatur zu hoch sind; der spezifische Widerstand der Keramikprobe H bei 25°C lag bei mehr als $10^8$ Ωcm. Die nicht erfindungsgemäße Keramikprobe G zeigt zwar einen linearen Verlauf, der auf das ausschließliche Vorliegen von $Fe^{III}$ schließen lässt, jedoch wird durch die Substitution von Al durch Fe der Widerstand weiter abgesenkt, sodass die Forderung eines spezifischen Widerstands von einigen zehn Ωcm nicht erfüllt werden kann. Wie der Vergleich der Werte für die beiden Verbindungen B und D in Tabelle 1 und den Tabellen 2 und 3 zeigt, sind die erfindungsgemäßen Keramiken dagegen im gesamten Temperaturbereich zwischen 25 und 1000°C durch eine jeweils weitgehend übereinstimmende B-Konstante gekennzeichnet. Diese erweist sich beim zyklischen Auf- und Abheizen nach dem ersten Zyklus innerhalb einer akzeptablen Toleranz als konstant.

Figur 2 zeigt eine schematische Seitenansicht einer Ausführungsform des elektrokeramischen Bauelements 1. Diese umfasst einen keramischen Grundkörper 2, auf dessen Unterseite eine erste elektrisch leitfähige Kontaktflächen 10 und auf dessen Oberseite eine zweite elektrisch leitfähige Kontaktflächen 15 angeordnet ist.

Bezugszeichenliste

1     Bauelement
2     keramischer Grundkörper
10    erste elektrisch leitfähige Kontaktflächen
15    zweite elektrisch leitfähige Kontaktflächen

A-F   Kennlinienverlauf für erfindungsgemäße Keramiken
G,H   Kennlinienverlauf für nicht erfindungsgemäße Keramiken

**Patentansprüche**

1. Keramikmaterial der allgemeinen Formel:

$$[SE_{1-x}M^{II}_{x}]\ [Cr_{1-y-z}R_{y}L_{z}]O_{3}$$

wobei SE für eine oder mehrere Seltenerdmetalle steht, $M^{II}$ für ein oder mehrere Metalle der Oxidationsstufe +II steht, L für Al und/oder Ga steht, R für ein oder mehrere Metalle ausgewählt aus Fe, Zn, Ge, Sn steht, und es gilt: $0 < x < 1$; $0 < y < 1$; $0,5 < z < 1$; $y+z < 1$; $0,1 < 1-y-z < 0,2$.

2. Keramikmaterial nach Anspruch 1,
wobei SE für ein oder mehrere Elemente steht ausgewählt aus: Y, Ce, Sm, Eu, Gd, Tb, Dy, Ho, Er, Yb, Lu.

3. Keramikmaterial nach einem der vorhergehenden Ansprüche,
wobei $M^{II}$ für ein oder mehrere Elemente steht ausgewählt aus: Mg, Ca, Sr, Ba.

4. Keramikmaterial nach Anspruch 1,
wobei R für Fe steht, oder eine Metallkombination, welche Fe umfasst.

5. Keramikmaterial nach Anspruch 1,
wobei R für Zn steht, oder eine Metallkombination, welche Zn umfasst.

6. Keramikmaterial nach Anspruch 1,
wobei R für Ge steht, oder eine Metallkombination, welche Ge umfasst.

7. Keramikmaterial nach Anspruch 1,
wobei R für Sn steht, oder eine Metallkombination, welche Sn umfasst.

8. Keramikmaterial nach einem der vorhergehenden Ansprüche,
wobei für die Parameter x gilt: $0,03 \leq x \leq 0,5$.

9. Keramikmaterial nach einem der vorhergehenden Ansprüche,
wobei für die Parameter y gilt: $0 < y < 0,5$.

10. Keramikmaterial nach einem der vorhergehenden Ansprüche,
wobei für die Parameter z gilt: $0,5 < z < 0,9$.

11. Keramikmaterial nach einem der vorhergehenden Ansprüche, ausgebildet als phasenhomogenes Perowskit-Mischkristall-system der allgemeinen Formel $ABO_{3}$.

12. Keramikmaterial nach einem der vorhergehenden Ansprüche,
wobei das Keramikmaterial einen negativen Temperaturkoeffizienten aufweist.

13. Verfahren zur Herstellung eines Keramikmaterials nach einem der vorhergehenden Ansprüche umfassend die Verfahrensschritte:

A) Mischen der folgenden Verbindungen: $SE_2O_3$, $M^{II}CO_3$, $Cr_2O_3$, $L_2O_3$, und zusätzlich gegebenenfalls ein Oxid von R, so dass ein Gemisch entsteht,
B) Sintern des unter A) gefertigten Gemisches.

14. Elektrokeramisches Bauelement umfassend ein keramisches Material nach einem der Ansprüche 1 bis 12.

15. Elektrokeramisches Bauelement nach Anspruch 14, umfassend:

- einen keramischen Grundkörper (2),
- zwei elektrisch leitfähige Kontaktflächen (10,15) angeordnet auf der Oberfläche des keramischen Grundkörpers (2).

**Claims**

1. Ceramic material of the general formula:

$$[SE_{1-x}M^{II}x] [Cr_{1-y-z}R_yL_z]O_3$$

where SE stands for one or more rare earth metals, $M^{II}$ stands for one or more metals of the oxidation stage +II, L stands for Al and/or Ga, R stands for one or more metals selected from Fe, Zn, Ge, Sn, and it holds that: 0 < x 1; 0 < y < 1; 0.5 < z < 1; y+z < 1; 0.1 < 1-y-z < 0.2.

2. Ceramic material according to Claim 1, where SE stands for one or more elements selected from: Y, Ce, Sm, Eu, Gd, Tb, Dy, Ho, Er, Yb, Lu.

3. Ceramic material according to either of the preceding claims, where $M^{II}$ stands for one or more elements selected from: Mg, Ca, Sr, Ba.

4. Ceramic material according to Claim 1, where R stands for Fe, or a combination of metals that comprises Fe.

5. Ceramic material according to Claim 1, where R stands for Zn, or a combination of metals that comprises Zn.

6. Ceramic material according to Claim 1, where R stands for Ge, or a combination of metals that comprises Ge.

7. Ceramic material according to Claim 1, where R stands for Sn, or a combination of metals that comprises Sn.

8. Ceramic material according to one of the preceding claims, where it holds for the parameter x that: $0.03 \leq x \leq 0.5$.

9. Ceramic material according to one of the preceding claims, where it holds for the parameter y that: 0 < y < 0.5.

10. Ceramic material according to one of the preceding claims, where it holds for the parameter z that: 0.5 < z < 0.9.

11. Ceramic material according to one of the preceding claims, formed as a phase-homogeneous perovskite solid-solution system of the general formula $ABO_3$.

12. Ceramic material according to one of the preceding claims, where the ceramic material has a negative temperature coefficient.

13. Method for the manufacture of a ceramic material according to one of the preceding claims, comprising the method steps of:

A) mixing the following compounds: $SE_2O_3$, $M^{II}CO_3$, $Cr_2O_3$, $L_2O_3$ and in addition possibly an oxide of R, so that a mixture is obtained,
B) sintering the mixture produced under A).

14. Electroceramic component comprising a ceramic material according to one of Claims 1 to 12.

**15.** Electroceramic component according to Claim 14, comprising:

- a ceramic base body (2),
- two electrically conductive contact areas (10, 15) arranged on the surface of the ceramic base body (2).

**Revendications**

**1.** Matériau céramique de la formule générale

$$[SE_{1-x}M^{II}_x] [Cr_{1-y-x}R_yL_z]O_3$$

dans laquelle SE représente un ou plusieurs métaux des terres rares, $M^{II}$ représente une ou plusieurs métaux du niveau d'oxydation +II, L représente Al et/ou Ga, R représente un ou plusieurs métaux choisis dans le groupe Fe, Zn, Ge, Sn, et on a les conditions: $0 < x < 1$; $0 < y < 1$; $0,5 < z < 1$; $y+z < 1$; $0,1 < 1-y-z < 0,2$.

**2.** Matériau céramique selon la revendication 1, dans lequel SE représente un ou plusieurs élément(s), choisi(s) parmi: Y, Ce, Sm, Eu, Gd, Tb, Dy, Ho, Er, Yb, Lu.

**3.** Matériau céramique selon l'une quelconque des revendications précédentes, dans lequel $M^{II}$ représente un ou plusieurs élément(s), choisi(s) parmi : Mg, Ca, Sr, Ba.

**4.** Matériau céramique selon la revendication 1, dans lequel R représente Fe, ou une combinaison de métaux qui comprend Fe.

**5.** Matériau céramique selon la revendication 1, dans lequel R représente Zn, ou une combinaison de métaux qui comprend Zn.

**6.** Matériau céramique selon la revendication 1, dans lequel R représente Ge, ou une combinaison de métaux qui comprend Ge.

**7.** Matériau céramique selon la revendication 1, dans lequel R représente Sn, ou une combinaison de métaux qui comprend Sn.

**8.** Matériau céramique selon l'une quelconque des revendications précédentes, dans lequel on a pour le paramètre x: $0,03 \leq x \leq 0,5$.

**9.** Matériau céramique selon l'une quelconque des revendications précédentes, dans lequel on a pour le paramètre y: $0 < y\ 0,5$.

**10.** Matériau céramique selon l'une quelconque des revendications précédentes, dans lequel on a pour le paramètre z: $0,5 < z < 0,9$.

**11.** Matériau céramique selon l'une quelconque des revendications précédentes, produit sous la forme d'un système de cristal mixte de pérowskite en phase homogène, de la formule générale $ABO_3$.

**12.** Matériau céramique selon l'une quelconque des revendications précédentes, dans lequel le matériau céramique présente un coefficient de température négatif.

**13.** Procédé de production d'un matériau céramique selon l'une quelconque des revendications précédentes, comprenant les étapes suivantes:

A) mélanger les composés suivants: $SE_2O_3$, $M^{II}CO_3$, $Cr_2O_3$, $L_2O_3$, et en plus éventuellement un oxyde de R, de façon à réaliser un mélange,
B) fritter le mélange préparé sous A).

**14.** Composant électrocéramique comprenant un matériau céramique selon l'une quelconque des revendications 1 à 12.

**15.** Composant électrocéramique selon la revendication 14, comprenant:

- un corps de base céramique (2),
- deux faces de contact électriquement conductrices (10, 15) disposées sur la surface du corps de base céramique (2).

## Fig 1

## Fig 2